(19) Europäisches Patentamt
European Patent Office
Office européen des brevets

(11) **EP 4 406 864 A1**

(12) **EUROPEAN PATENT APPLICATION**
published in accordance with Art. 153(4) EPC

(43) Date of publication:
**31.07.2024 Bulletin 2024/31**

(21) Application number: **22872493.6**

(22) Date of filing: **24.06.2022**

(51) International Patent Classification (IPC):
**B65D 1/26** $^{(2006.01)}$ **B65D 21/02** $^{(2006.01)}$

(52) Cooperative Patent Classification (CPC):
**B65D 1/26; B65D 21/02; Y02W 30/80**

(86) International application number:
**PCT/JP2022/025249**

(87) International publication number:
**WO 2023/047736 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.09.2021 JP 2021155518**

(71) Applicant: **Toyo Seikan Co., Ltd.**
**Tokyo 141-8640 (JP)**

(72) Inventors:
• **MURASE, Takeshi**
**Yokohama-shi**
**Kanagawa 230-0001 (JP)**

• **SASAJIMA, Nobuhiro**
**Yokohama-shi**
**Kanagawa 230-0001 (JP)**
• **TANAKA, Shouta**
**Yokohama-shi**
**Kanagawa 230-0001 (JP)**
• **SATO, Erika**
**Yokohama-shi**
**Kanagawa 230-0001 (JP)**

(74) Representative: **J A Kemp LLP**
**80 Turnmill Street**
**London EC1M 5QU (GB)**

(54) **STACKABLE METAL CUP**

(57) A stackable metal cup (1) including a body portion (3) having a hollow shape with an open upper portion and having a shape in which an inner diameter or an outer diameter is reduced toward a lower side such that an upper end inner diameter is larger than a lower end outer diameter, wherein a region (P) in which an angle of the body portion with respect to a horizontal plane ranges from 85 to 90 degrees and a region (Q) in which an angle of the body portion with respect to the horizontal plane is smaller than the angle in the region (P) are alternately continuous in a height direction such that a clearance (t) of 0.5 mm or more is formed between an inner diameter of the body portion of a lower metal cup and an outer diameter of the body portion of an upper metal cup in a stacked state, the lower metal cup and the upper metal cup each being identical to the stackable metal cup.

FIG. 2

## Description

Technical Field

The present invention relates to a stackable metal cup that can be stacked to be stored.

Background Art

Conventionally, cup-shaped vessels made of paper or plastic have been widely used for drinking or the like. This is because vessels formed of such materials are lightweight, easy to form, inexpensive, and suitable for disposable use. However, in recent years, the focus has shifted to metal cups to address environmental issues such as resource depletion and problems caused by waste. Metal cups are stronger and more durable than cups made of paper or plastic and are suitable for repeated use, and thus can significantly contribute to reducing depletion of resources and generation of waste.

However, since a metal cup is strong and does not easily deform, metal cups cannot easily be stacked. To make a metal cup stackable, the inner diameter of an opening at the upper end may be set larger than the outer diameter of a bottom portion, and a side wall portion may have a form tapered from the upper end toward the bottom portion. However, when metal cups with such a configuration are stacked, the outer surface of the side wall of the upper cup adheres closely to the inner surface of the side wall of the lower cup, which makes it difficult to pull off the upper cup (i.e., the stacked cup). Accordingly, a large force is required to pull off the upper cup, and a printed surface formed on the outer surface of the side wall may be rubbed and become blurry when the upper cup is pulled off. It can be said that such a problem does not occur in cups made of paper or plastic because the side walls of the cups can be easily deformed.

As a metal cup in which the above-described problem does not occur, Patent Documents 1 and 2 propose metal cups each having a side wall portion whose inner and outer surfaces are formed with a step.

Since these metal cups are stacked using the steps, a gap is formed between the outer surface of the side wall of the upper cup and the inner surface of the side wall of the lower cup which holds the upper cup, thereby greatly reducing the portion at which the cups adhere closely to each other. Therefore, the stacked cups can be easily pulled off and stackability is significantly improved.

Citation List

Patent Literature

Patent Document 1: JP 2015-506842 A
Patent Document 2: JP 2020-508874 A

Summary of Invention

Technical Problem

However, even in the cup including the step as described above, there is room for improvement in terms of stackability. That is, the step included in the cup described above is formed on the inner and outer surfaces by horizontal wall portions provided on a body portion and extending horizontally or at an angle close to horizontal. Therefore, when the cups are stacked, the stacked upper cup is held such that the bottom portion of the upper cup rests on the horizontal wall portion of the lower cup, and thus a space below the bottom portion of the upper cup becomes a closed space. This generates a pressure difference between the closed space and the external space. Thus, even when the side wall portions no longer adhere to each other, it becomes difficult to pull off the stacked upper cup due to the difference between the internal pressure and the external pressure, and improvement is desired. In addition, the formation of the closed space as described above means that there is nowhere for air to escape, which ultimately causes a problem in that stacking is difficult.

Further, when the stackability is improved by the steps formed of the horizontal wall portions, the cups are likely to be less stable, the standing state of the cups on a surface becomes unstable, and the cups are likely to fall over.

It is an object of the present invention to provide a metal cup in which the formation of a closed space is effectively prevented and stackability is further improved.

Solution to Problem

According to the present invention, there is provided a stackable metal cup including: a body portion having a hollow shape with an open upper portion and having a shape in which an inner diameter or an outer diameter is reduced toward a lower side such that an upper end inner diameter is larger than a lower end outer diameter; and a bottom portion including a grounding portion continuous with a lower end of the body portion via a curvature portion. A region P in which an angle of the body portion with respect to a horizontal plane ranges from 85 to 90 degrees and a region Q in which an angle of the body portion with respect to the horizontal plane is smaller than the angle in the region P are alternately continuous in a height direction such that a clearance t of 0.5 mm or more is formed between an inner diameter of the body portion of a lower metal cup and an outer diameter of the body portion of an upper metal cup in a stacked state, the lower metal cup and the upper metal cup each being identical to the stackable metal cup.

In the stackable metal cup of the present invention, it is preferable that

(1) in the region Q, the angle of the body portion with respect to the horizontal plane ranges from 80 to 88 degrees; and

(2) the region P at the lowermost part extends upward from the curvature portion such that a stack width d is 20 mm or less in the stacked state.

A stacked structure in which two or more stackable metal cups described above are stacked includes a region in which a horizontal clearance between the inner diameter of the body portion of the lower metal cup and the outer diameter of the body portion of the upper metal cup is 0.5 mm or more.

Advantageous Effects of Invention

In the stackable metal cup, the inner diameter of the upper end (the inner diameter of an opening) is set larger than the outer diameter of the lower end portion at a side wall (body portion) forming a hollow portion, and the inner diameter and the outer diameter of the body portion are reduced toward a lower side. Accordingly, when the metal cups are stacked to form the stacked structure, the upper cup enters the space of the lower cup and is held in the space. According to the present invention, in the stackable metal cup, the region P in which the angle of the body portion (side wall) with respect to a horizontal plane ranges from 85 to 90 degrees and the region Q in which the angle of the body portion (side wall) with respect to a horizontal plane is smaller than the angle in the region P (e.g., a region in which the angle is 80 to 88 degrees) are alternately continuous in the height direction in a side view. In the stacked state, these regions P and Q form the clearance t of 0.5 mm or more between the inner diameter of the body portion of the lower metal cup and the outer diameter of the body portion of the upper metal cup. That is, in the metal cup of the present invention, no horizontal step portion is formed at the body portion. Further, in the stacked structure, the outer surface of the body portion of the upper cup is in contact with an inclined surface of the body portion of the lower cup, and in this state, the large clearance t (space between the body portions) is formed. Therefore, the upper cup can be easily moved right and left, a closed space is unlikely to be formed, stacking is easy, and the stacked metal cups can be easily pulled off.

In addition, since the large clearance t is formed as described above, when the metal cup is inserted at the time of stacking or pulled off, the outer surface of the body portion is less likely to be rubbed, and damage to a printed surface due to rubbing can be effectively suppressed.

Brief Description of Drawings

FIG. 1 is a schematic side cross-sectional view illustrating an example of a metal cup according to the present invention.

FIG. 2 is a partially enlarged side cross-sectional view illustrating a lower end portion of a body portion of the metal cup in FIG. 1.

FIG. 3 is a schematic side cross-sectional view illustrating a stacked state of the metal cups in FIG. 1.

FIG. 4 is a partially enlarged side cross-sectional view illustrating a state of body portions of an upper cup and a lower cup in the stacked state in FIG. 3.

Description of Embodiments

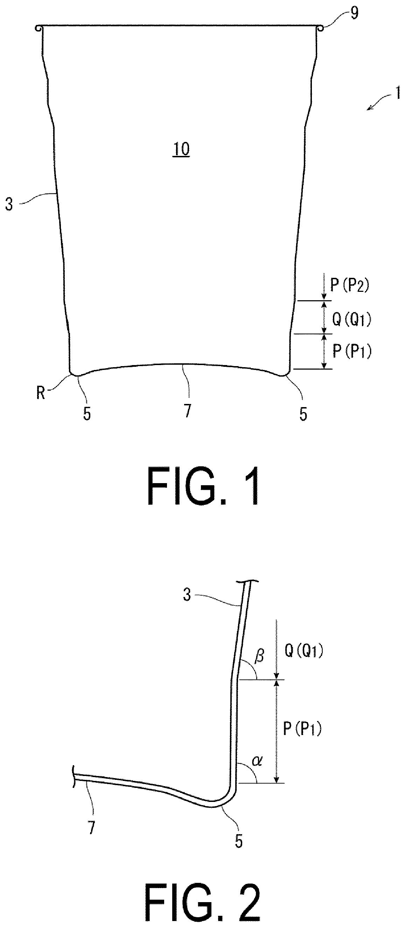

In FIG. 1, a metal cup according to the present invention, which is overall denoted by 1, includes a body portion 3 and a bottom portion 7 provided with a grounding portion 5. Typically, a curled portion 9 is formed at an upper end of the body portion 3 so as not to expose a sharp edge portion to the outside. A lower end of the body portion 3 is continuous with the grounding portion 5 via a curvature portion R.

The bottom portion 7 has a shape in which a central part is recessed in a dome shape. A circumferential edge of this dome-shaped recessed portion constitutes the grounding portion 5. With this configuration, the standing state of the metal cup 1 is stably maintained.

The body portion 3 forms a hollow portion 10 having an open upper end and is closed by the bottom portion 7 so as to accommodate a liquid such as a beverage depending on the intended usage.

In the metal cup 1 described above, to ensure stackability, the opening diameter is largest at the upper end of the hollow portion 10 (i.e., the inner diameter of the upper end of the body portion 3) and the diameter reduces toward a lower side.

Note that the metal serving as a constituent material of the metal cup 1 may be any metal or alloy material, and may be, for example, aluminum, copper, iron, an alloy containing these metals, a tin-plated steel plate such as a tin plate, or a surface-treated steel plate such as an aluminum plate subjected to chemical conversion treatment. In general, steel, stainless steel, aluminum, or an aluminum alloy is preferable, and aluminum or an aluminum alloy is particularly preferable from the viewpoint of lightness and workability.

Further, an organic resin coating may be laminated on the inner surface of the metal cup 1. The organic resin coating is a coating derived from a coating material such as an acrylic coating material, a urethane coating material, a silicon coating material, or a fluorine-based coating material, or a thermoplastic resin such as polyethylene terephthalate (PET), and is provided to give corrosion resistance and suppress surface roughness during harsh formation processes.

The metal cup 1 is formed, for example, by punching, drawing, or redrawing-ironing using a thin metal blank sheet (the above-mentioned organic resin coating may be formed on a side to be the inner surface), then doming the bottom portion, and subsequently performing washing and drying, outer surface printing, finish varnish application and baking, inner surface paint application and baking, curling, and the like. Note that diameter reduction from the upper end of the body portion 3 toward the lower side can be performed by performing redrawing a plurality of times.

In the metal cup 1 described above, the thickness of a central portion of the bottom portion 7 corresponds to the thickness of the blank sheet used in forming the cup 1 and is typically from 0.10 to 0.50 mm, though the thickness varies depending on the intended usage of the cup 1. The thickness of the body portion 3 and a height H of the cup (height from the grounding portion 5 to the upper end of the body portion 3) vary depending on the degree of ironing. The body portion 3 is made progressively thinner and the height H is progressively increased as ironing is performed in multiple stages by gradually increasing the ironing ratio.

Referring to FIGS. 1 and 2, the present invention has a remarkable feature in that the body portion 3 of the cup 1 has a form in which regions P each having a relatively large angle with respect to a horizontal plane and regions Q each having an angle with respect to the horizontal plane in a relatively small range are alternately continuous in a height direction.

For example, an inclination angle $\alpha$ of the body portion 3 at the region P ranges from 85 to 90 degrees and an inclination angle $\beta$ of the body portion 3 at the region Q ranges from 80 to 88 degrees, on the condition that $\beta$ is smaller than $\alpha$. These regions P and regions Q are alternately continuous in the height direction, whereby the body portion 3 has a form in which the diameter is reduced from the upper end toward the lower side. Note that, preferably, a boundary portion between the region P and the region Q is rounded without forming a corner. This is because the cup is made of metal and thus it is desirable not to form a sharp corner.

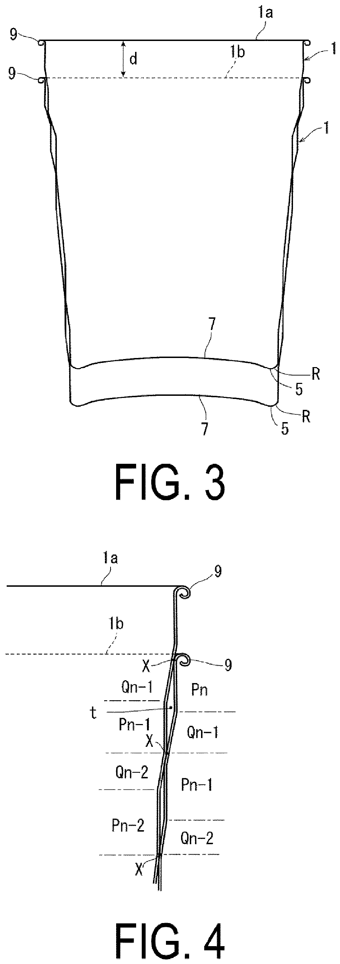

As can be understood from FIG. 3 illustrating a state in which the metal cups 1 as described above are stacked and FIG. 4 illustrating a partially enlarged view of the state, in the metal cup 1 of the present invention, the lowermost part is the region P, the region Q is continuous with the region P, and, for example, this chain is represented as follows.

$$P_1 \cdot Q_1 \cdot P_2 \cdot Q_2 \cdots Q_{n-2} \cdot P_{n-1} \cdot Q_{n-1} \cdot P_n$$

In the above representation, $P_1$ is the lowermost position of the body portion 3, $P_n$ is the upper end of the body portion 3, and n is a number equal to or greater than 3.

In a plurality of the regions P and a plurality of the regions Q, the inclination angle $\alpha$ or the inclination angle $\beta$ may be different for every region P or every region Q, provided that the region P and the region Q located at adjacent positions satisfy $\alpha > \beta$.

That is, in the body portion 3 having such a form, no horizontal wall is formed, and as understood from FIGS. 3 and 4, contact portions X (see FIG. 4) between the body portion 3 of an upper cup 1a and the body portion 3 of a lower cup 1b are present at least at the inclined surfaces of the regions Q. Thus, contact between the cup 1a and the cup 1b is line contact, and adhesion areas are extremely small. In the present invention, provided that the chain state between the regions P and the regions Q is formed, the sizes of the inclination angles $\alpha$ in the regions P and the inclination angles $\beta$ in the regions Q and the sizes (lengths) of each of the regions P and Q are set such that a clearance t (horizontal space between the adjacent contact portions X) of 0.5 mm or more, particularly 0.7 to 1.5 mm is formed between the inner diameter of the body portion 3 of the lower metal cup 1b and the outer diameter of the body portion 3 of the upper metal cup 1a in the stacked state. That is, these parameters are set such that the clearance t is formed in consideration of the thickness of the body portion 3.

In the present invention, since the chain state between the regions P and Q is formed such that a large clearance t is formed, the adhesion area between the cups 1a and 1b is set extremely small and the clearances t formed at adhesion portions (in the vicinities of the contact portions X) are also set large. Thus, unlike a known metal cup including a body portion formed with a horizontal step, there are advantages that in the stacked state, the upper cup 1a can be easily moved right and left and a closed space is unlikely to be formed, and thus stacking is easy. In addition, the stacked metal cup 1a can be easily pulled off, and at this time, the outer surface of the body portion 3 is less likely to be rubbed and damage to a printed surface due to rubbing can be effectively suppressed.

Further, in the present invention, it is preferable that in the stacked structure, a stack width d (see FIG. 3) is set to be 20 mm or less. The stack width d corresponds to a distance between the upper ends of the upper cup 1a and the lower cup 1b (or the distance between the bottom portions 7) in the stacked state. When the stack width d is small, a large number of the metal cups 1 can be stacked. To set the stack width d to a small range as described above, in the region P at the lowermost part which extends upward from the curvature portion R, it is desirable to set the inclination angle $\alpha$ to a value smaller than 90 degrees, particularly to an angle smaller than 90 degrees (particularly 88 degrees or less) in accordance with the thickness of the body portion 3 at the lowermost part. That is, when the inclination angle $\alpha$ is 90 degrees, the upper metal cup 1a to be stacked cannot be inserted up to a portion where the region P at the lowermost part is present. As a result, the above-described stack width d cannot be ensured. By slightly inclining the body portion 3 in the region P, the upper end of the region P opens by an amount larger than the thickness in the region P, and the lower metal cup 1b can enter the upper metal cup 1a to a position closer to the bottom portion 7 by the open amount, which allows the stack width d to be set smaller.

The metal cup 1 of the present invention described above has excellent stackability, and a large number of the metal cups 1 can be stacked and held. Thus, the metal cup 1 has excellent storability and transportability, is suitably used as, for example, a vessel for drinking various beverages, and is also suitably used for business purposes.

Although the curled portion 9 is formed at the upper end in the above-described example, a horizontal flange or the like may be formed instead of the curled portion 9 and a lid member may be provided by heat sealing or the like after a food product or the like is accommodated. This is advantageous in storing the cup when the cup is repeatedly used.

Reference Signs List

1: Metal cup
1a: Upper cup in stacked state
1b: Lower cup in stacked state
3: Body portion
R: Curvature portion
5: Grounding portion
7: Bottom portion
9: Curled portion
10: Hollow portion

**Claims**

1. A stackable metal cup comprising:

    a body portion having a hollow shape with an open upper portion and having a shape in which an inner diameter or an outer diameter is reduced toward a lower side such that an upper end inner diameter is larger than a lower end outer diameter; and
    a bottom portion including a grounding portion, the grounding portion being continuous with a lower end of the body portion via a curvature portion,
    a region P in which an angle of the body portion with respect to a horizontal plane ranges from 85 to 90 degrees and a region Q in which an angle of the body portion with respect to the horizontal plane is smaller than the angle in the region P are alternately continuous in a height direction such that a clearance t of 0.5 mm or more is formed between an inner diameter of the body portion of a lower metal cup and an outer diameter of the body portion of an upper metal cup in a stacked state, the lower metal cup and the upper metal cup each being identical to the stackable metal cup.

2. The stackable metal cup according to claim 1, wherein the angle of the body portion with respect to the horizontal plane in the region Q ranges from 80 to 88 degrees.

3. The stackable metal cup according to claim 1, wherein the region P at a lowermost part extends upward from the curvature portion such that a stack width d is 20 mm or less in the stacked state.

4. A stacked structure of the stackable metal cup according to claim 1, the stacked structure comprising a region in which a horizontal space between the inner diameter of the body portion of the lower cup and the outer diameter of the body portion of the upper cup is 0.5 mm or more.

# FIG. 1

# FIG. 2

FIG. 3

FIG. 4

## INTERNATIONAL SEARCH REPORT

| International application No. |
| --- |
| **PCT/JP2022/025249** |

**A.      CLASSIFICATION OF SUBJECT MATTER**

*B65D 1/26*(2006.01)i; *B65D 21/02*(2006.01)i
FI:   B65D1/26 110; B65D21/02 410

According to International Patent Classification (IPC) or to both national classification and IPC

**B.      FIELDS SEARCHED**

Minimum documentation searched (classification system followed by classification symbols)

B65D1/26; B65D21/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.      DOCUMENTS CONSIDERED TO BE RELEVANT**

| Category* | Citation of document, with indication, where appropriate, of the relevant passages | Relevant to claim No. |
| --- | --- | --- |
| Y | WO 2020/123291 A1 (BALL CORPORATION) 18 June 2020 (2020-06-18)<br>p. 7, line 21 to p. 24, line 18, fig. 1-17 | 1-4 |
| Y | JP 2017-114526 A (YOSHINO KOGYOSHO CO LTD) 29 June 2017 (2017-06-29)<br>paragraphs [0015]-[0037], fig. 1-7 | 1-4 |
| Y | JP 7-5128 B2 (TOYO SEIKAN KAISHA LTD  ) 25 January 1995 (1995-01-25)<br>paragraphs [0036], [0042], fig. 6 | 1-4 |
| Y | Microfilm of the specification and drawings annexed to the request of Japanese Utility Model Application No. 28269/1984 (Laid-open No. 142727/1985) (FUJI PHOTO FILM CO., LTD.) 21 September 1985 (1985-09-21), claims, specification, p. 3, line 13, fig. 3 | 1-4 |
| A | JP 7-52937 A (SANYO SHIKI KK) 28 February 1995 (1995-02-28) | 1-4 |
| A | JP 8-85545 A (MITSUBISHI PLASTICS IND LTD) 02 April 1996 (1996-04-02) | 1-4 |
| A | Microfilm of the specification and drawings annexed to the request of Japanese Utility Model Application No. 58636/1974 (Laid-open No. 147781/1975) (MISSION BENDING KK) 08 December 1975 (1975-12-08) | 1-4 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 August 2022** | **13 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
| :--- |
| **PCT/JP2022/025249** |

| Patent document cited in search report | | | Publication date (day/month/year) | Patent family member(s) | | | Publication date (day/month/year) |
| :--- | :--- | :--- | :--- | :--- | :--- | :--- | :--- |
| WO | 2020/123291 | A1 | 18 June 2020 | US<br>CN | 2019/0112100<br>113260468 | A1<br>A | |
| JP | 2017-114526 | A | 29 June 2017 | (Family: none) | | | |
| JP | 7-5128 | B2 | 25 January 1995 | (Family: none) | | | |
| JP | 60-142727 | U1 | 21 September 1985 | (Family: none) | | | |
| JP | 7-52937 | A | 28 February 1995 | (Family: none) | | | |
| JP | 8-85545 | A | 02 April 1996 | (Family: none) | | | |
| JP | 50-147781 | U1 | 08 December 1975 | (Family: none) | | | |

Form PCT/ISA/210 (patent family annex) (January 2015)

**REFERENCES CITED IN THE DESCRIPTION**

**Patent documents cited in the description**

- JP 2015506842 A

- JP 2020508874 A